# EUROPÄISCHE PATENTSCHRIFT

(11) **EP 1 787 784 B1**
(45) Veröffentlichungstag und Bekanntmachung des Hinweises auf die Patenterteilung: **26.03.2008**
(21) Anmeldenummer: 06124307.7
(22) Anmeldetag: 17.11.2006
(51) Int. Cl.: B29C 45/44

(54) **Werkzeug zur Herstellung von Bauteilen durch Spritzguß, Druckguß oder Ablegeverfahren**
Mould for manufacturing parts by injection moulding, pressure die casting or a deposition method
Moule pour la fabrication de pièces par moulage par injection, par moulage sous pression ou par un procédé de dépôt

(30) Priorität: 22.11.2005 DE 102005055615
(43) Veröffentlichungstag der Anmeldung: 23.05.2007
(73) Patentinhaber: Gritscher, Karl, 83527 Haag (DE)
(72) Erfinder: Gritscher, Karl, 83527 Haag (DE)
(74) Vertreter: Gustorf, Gerhard

(56) Entgegenhaltungen:
- JP-A- 56 038 238
- JP-A- 60 220 722
- SU-A1- 1 466 943
- US-A1- 4 502 659

## Beschreibung

Die Erfindung betrifft ein Werkzeug zur Herstellung von Bauteilen aus Kunststoff oder Metall durch Spritzguß, Druckguß oder Ablegeverfahren nach dem Oberbegriff des Patentanspruchs 1.

Zur Spritzguß- oder Druckgußherstellung von aus Kunststoff bestehenden Bauteilen, die von einer Trägerplatte nach einer Seite abstehen und eine Öffnung oder Hinterschneidung haben, dienen in bekannter Weise Werkzeuge mit einer Schließeinheit, die aus einem Formunterteil und einem relativ dazu verschiebbaren Formoberteil bestehen, wobei dem Formoberteil ein Kern sowie ein Auswerferorgan zugeordnet sind. Die herkömmlichen Formoberteile benötigen für die Herstellung der Öffnung oder Hinterschneidung Werkzeugschieber, die allerdings gesonderte Führungen sowie einen eigenen Motor für ihren Antrieb erforderlich machen. Ferner sind Schrägauswerferorgane notwendig, die ebenfalls eine aufwändige Führung benötigen. Die bekannten Lösungen haben daher einen verhältnismäßig komplizierten Aufbau, erfordern einen großen Bauraum und sind bei der Herstellung sowohl zeitaufwändig als auch kostenintensiv.

Ein weiteres Werkzeug ist aus der JP-A-56 038 238 bekannt.

Der Erfindung liegt daher die Aufgabe zugrunde, ein Werkzeug zur Herstellung sowohl steifer als auch elastischer Bauteile mit einer Öffnung oder Hinterschneidung zur Verfügung zu stellen, das bei konstruktiv einfachem Aufbau in der Lage ist, die Bauteile platzsparend, kostengünstig und zeitsparend herzustellen.

Bei einem Werkzeug der im Oberbegriff des Patentanspruchs 1 angegebenen Gattung wird diese Aufgabe durch die im kennzeichnenden Teil angegebenen Merkmale gelöst.

Mit Hilfe des wenigstens einen ausschwenkbaren Formelementes ist es möglich, ohne Werkzeugschieber Bauteile herzustellen, die eine Öffnung oder Hinterschneidung haben. Dabei kann es sich um Bauteile handeln, die sowohl aus einem steifen Werkstoff, z. B. Aluminium, als auch aus einem elastischen Werkstoff, z. B. Kunststoff bestehen. Da die Formelemente frei schwenkbar am unteren Teil des Kerns gelagert sind, schwenken sie in der Entformungsphase automatisch aus der Öffnung oder Hinterschneidung heraus, so daß das Werkstück freigegeben wird.

In einer ersten Phase nach dem Erkalten oder Aushärten des verwendeten Werkstoffs wird das Auswerferorgan gemeinsam mit dem Kern relativ zu dem geöffneten Formoberteil verfahren, wodurch das Bauteil aus der Form ausgeschoben wird. In der unmittelbar anschließenden zweiten Phase wird der Kern über seinen Endanschlag angehalten, so daß nur noch das Auswerferorgan weiter verfahren wird; dabei werden die Formelemente des Kerns selbsttätig aus der Öffnung oder Hinterschneidung herausgeschwenkt.

Weitere Merkmale und Vorteile der Erfindung ergeben sich aus den Patentansprüchen und aus der folgenden Beschreibung von Ausführungsbeispielen, die in der Zeichnung dargestellt sind. Es zeigen:
Figur 1 die perspektivische Ansicht eines ersten möglichen Bauteils,
Figur 2 eine weitere Möglichkeit eines Bauteils, das mit der Erfindung hergestellt werden kann,
Figur 3 eine Variante der Figur 2,
Figuren 4, 5 und 6 weitere Varianten möglicher Bauteile,
Figur 7 im Vertikalschnitt ein Werkzeug nach der Erfindung im geschlossenen Zustand,
Figur 8 das Werkzeug der Figur 7 in der ersten Phase für die Entformung,
Figur 9 das Werkzeug der Figuren 7 und 8 in der zweiten Phase für die Entformung,
Figur 10 in vergrößertem Maßstab einen Ausschnitt aus Figur 9,
Figur 11 eine Variante des Werkzeugs in der zweiten Phase für die Entformung zur Herstellung eines Bauteils nach dem Beispiel der Figur 4,
Figur 12 die perspektivische Ansicht eines Kerns, wie er im Werkzeug der Figuren 7 bis 10 eingesetzt werden kann, und
Figur 13 eine andere Ausführungsform für das Werkzeug.

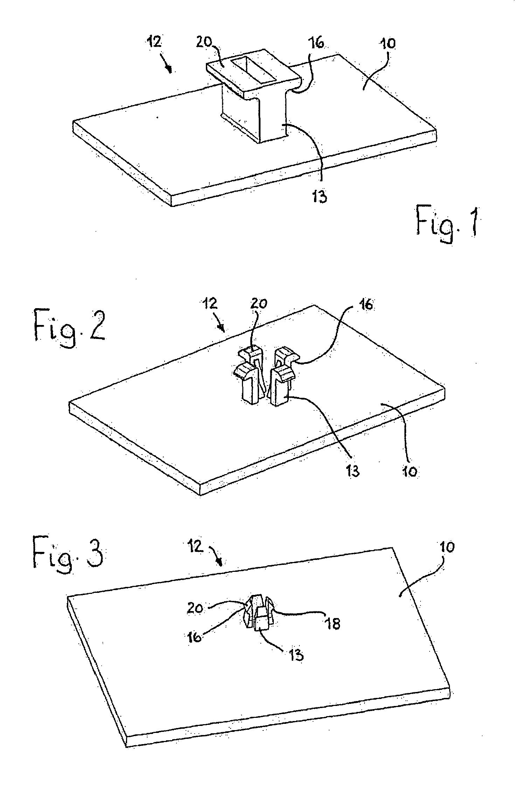

Figur 1 zeigt ein Beispiel für ein Werkstück 12, das mit dem Werkzeug gemäß der Erfindung durch Druck- oder Spritzguß oder im Ablegeverfahren aus einem thermoplastischen oder duroplastischen Kunststoff oder aus Metall, beispielsweise einer Aluminiumlegierung hergestellt werden kann. Das Werkstück 12 besteht aus einer Trägerplatte 10, von deren Oberseite ein Bauteil nach oben absteht, das hier aus einem säulenartigen Fuß 13 besteht, von dem ein Kopf 20 nach zwei Seiten absteht, so daß zwei Hinterschneidungen 16 gebildet werden.

Figur 2 zeigt eine weitere Möglichkeit für ein Werkstück 12, das ebenfalls eine Trägerplatte 10 aufweist. Von deren Oberseite stehen vier Bauteile nach oben ab, die hier als im Querschnitt rechteckige Säulen oder Füße 13 ausgebildet sind, von denen jeder einen vom gegenüberliegenden Fuß 13 abgewandten, hakenförmigen Kopf 20 hat; den Übergang vom Kopf 20 zum säulenartigen Fuß 13 bildet eine Hinterschneidung 16. Ein solches Werkstück kann beispielsweise als Schnapphaken- oder Schnapplaschenelement dienen, wenn die Füße 13 elastisch ausgebildet sind.

In der Variante der Figur 3 bilden die Übergänge vom Kopf 20 zum säulenartigen, aus elastischem Kunststoff bestehenden Fuß 13 ebenfalls Hinterschneidungen 16, die hier durch jeweils eine schräge Randfläche 18 gebildet werden.

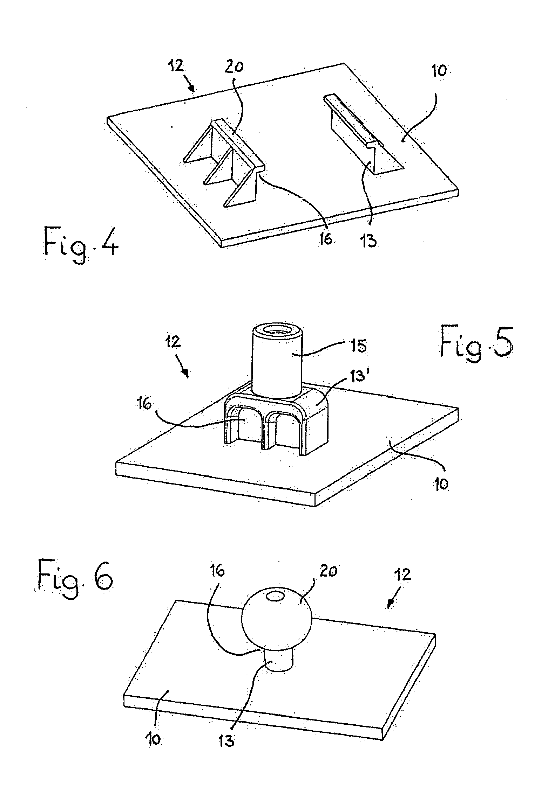

Figur 4 zeigt eine andere Möglichkeit, bei der von einer Trägerplatte 10 zwei einander gegenüberliegende Bauteile abstehen, die jeweils aus einem länglichen Fuß 13 bestehen; die beiden Köpfe 20 erstrecken sich in Längsrichtung der Füße 13 und sind einander zugewandt.

Beim Beispiel der Figur 5 steht von der Trägerplatte 10 ein Bauteil 13' ab, das an seinen beiden voneinander abgewandten Außenflächen torartige Hinterschneidungen 16 hat. Von der Oberseite des Bauteils 13' steht ein Aufnahmedom 15 für eine Gewindebuchse 15 nach oben ab.

Schließlich ist in Figur 6 eine Möglichkeit angedeutet, bei der das von der Trägerplatte 10 abstehende Bauteil aus einem säulenartigen Fuß 13 und einem kugelförmigen Kopf 20 besteht, wobei auch hier der Übergang vom Fuß 13 zum Kopf 20 eine Hinterschneidung 16 bildet.

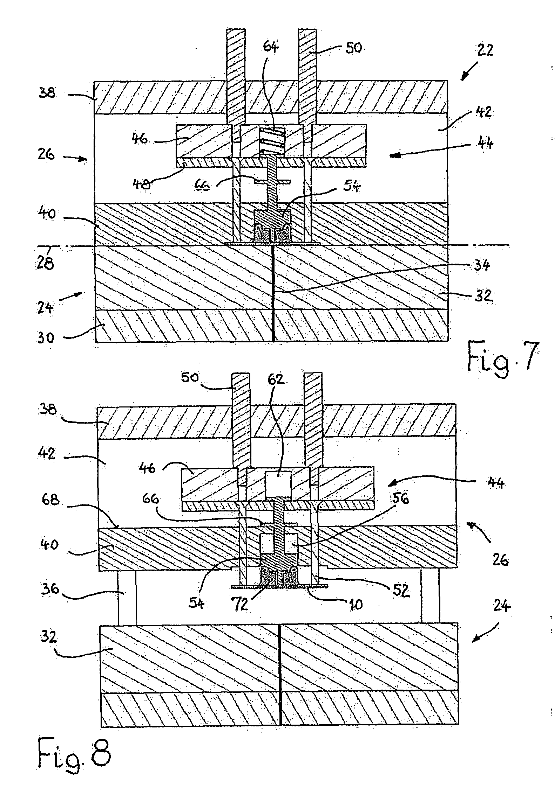

Zur Herstellung des in der Figur 1 gezeigten sowie auch anderer Werkstücke 12 dient ein Werkzeug mit einer Schließeinheit 22, die in den Figuren 7 bis 10 dargestellt ist. Diese Schließeinheit 22 besteht in an sich bekannter Weise aus einem Formunterteil 24 und einem Formoberteil 26, deren Trennebene 28 in Figur 7 angegeben ist. Das Formunterteil 24 ist aus einer unteren Aufspannplatte 30 und einer Formplatte 32 zusammengesetzt, durch die hindurch ein Einspritzkanal 34 nach oben führt.

Das Formoberteil 26 ist auf Säulen 36 relativ zum Formunterteil 24 vertikal verschiebbar geführt und besteht aus einer oberen Aufspannplatte 38, an der eine darunterliegende Formplatte 40 über seitliche Trägerwände 42 befestigt ist.

Dem Formoberteil 26 ist ein Auswerferorgan 44 zugeordnet, das aus einer oberen Auswerferplatte 46 und einer darunter befestigten, unteren Auswerferplatte 48 zusammengesetzt ist. Von der oberen Auswerferplatte 46 stehen Auswerferstangen 50 nach oben ab, die in entsprechenden Bohrungen der oberen Aufspannplatte 38 vertikal verschiebbar geführt sind.

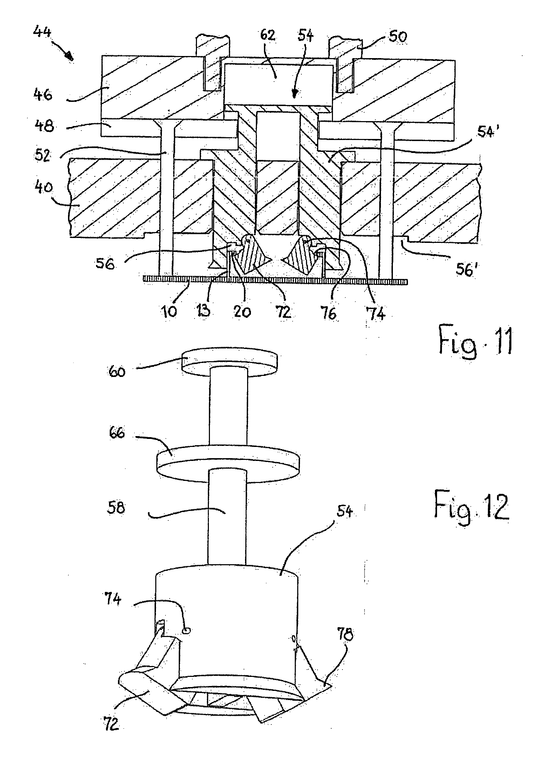

An der unteren Auswerferplatte 48 sind Auswerfernadeln 52 befestigt, die in entsprechenden Bohrungen der oberen Formplatte 40 vertikal verschiebbar geführt sind. Zwischen den Auswerfernadeln 52 erstreckt sich parallel zu diesen ein Kern 54, dem in der Formplatte 40 eine Hohlform 56 enspricht, die sich nach unten in eine flache Aussparung 56' für die Herstellung der Trägerplatte 10 fortsetzt. Wie aus den Figuren 7 bis 9 ersichtlich ist, geht der hier nach dem Beispiel der Figur 12 zylindrisch ausgebildete Kern 54 nach oben in einen Stempel 58 über, dessen oberes Ende 60 über eine Führungsbohrung in der unteren Auswerferplatte 48 in eine Kammer 62 eingreift. Wie Figur 7 zeigt, kann in dieser Kammer 62 eine Druckfeder 64 angeordnet sein, welche gegen das obere Ende 60 des Kerns 54 eine elastische Druckkraft ausübt.

In seinem mittleren Teil steht von dem Stempel 58 ein hier ringförmig ausgebildeter Endanschlag 66 in radialer Richtung ab, der sich in der Stellung der Schließeinheit 22 nach den Figuren 8 bis 10 auf der Oberfläche 68 der oberen Formplatte 40 abstützt.

Gemäß der Erfindung ist der Kern 54 mehrteilig ausgebildet, um die Hinterschneidungen 16 formen zu können. Hierzu sind, wie die Figuren 7 bis 12 zeigen, im unteren Bereich des Kerns 54 zwei Formelemente 72 über jeweils eine Schwenkachse 74 angelenkt, die hier rechtwinklig zur Verschieberichtung des Kerns 54 ausgerichtet ist. Selbstverständlich können auch mehr oder weniger Formelemente 72 vorgesehen sein, was von dem jeweils herzustellenden Werkstück 12 abhängt. So können die Beispiele der Figuren 2, 3 und 5 vier ausschwenkbare Formelemente 72 haben während das in den Figuren 1 und 6 gezeigte Werkstück 12 für die Herstellung des Kopfes 20 wenigstens zwei Formelemente 72 erfordert.

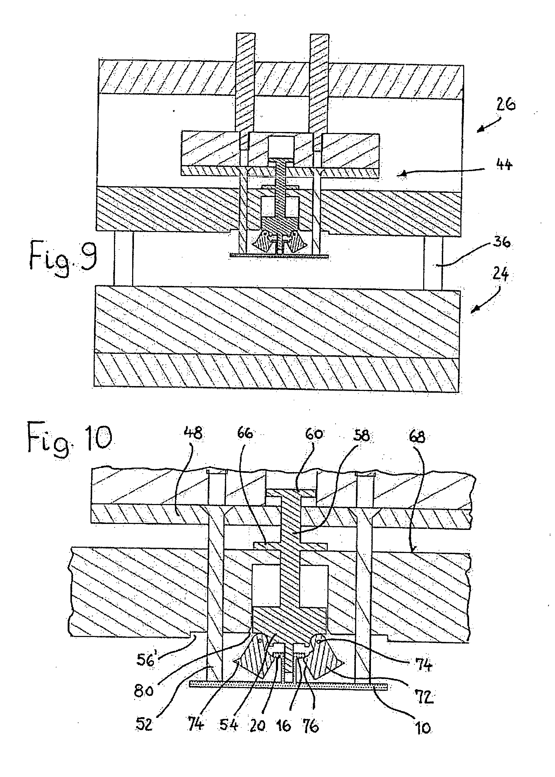

Die Außenfläche 76 jedes Formelementes 72, die der Hinterschneidung 16 zugewandt ist, entspricht der Form dieser Hinterschneidung, was besonders deutlich aus Figur 10 hervorgeht.

Von Vorteil ist es, wenn die schwenkbaren Formelemente 72 an ihrer unteren, von der Außenfläche 76 abgewandten Seite einen divergierenden Fortsatz 78 aufweisen, der bei geschlossenem Werkzeug, wie Figur 7 zeigt, in eine entsprechende Anfasung 80 (vgl. Figur 10) der Formplatte 40 des Formoberteils 26 eingreift. Durch diese Touchierflächen wird erreicht, daß bei geschlossener Form gemäß Figur 7 kein Werkstoff in die vom Kern 54 eingenommene Hohlform 56 fließen kann.

Figur 7 zeigt die Schließeinheit 22 in ihrer geschlossenen Stellung nach dem Einspritzen des Werkstoffs durch den Einspritzkanal 34. Nach dem Erkalten bzw. Aushärten des Werkstoffs beginnt die erste Öffnungsphase zum Entformen des Werkstücks 12, bei der sich gemäß Figur 8 das Formoberteil 26 nach oben bewegt, während sich das Auswerferorgan 44 relativ zu dem Formoberteil 26 nach unten verschiebt. Der dabei auf die oberen Enden der Auswerferstangen 50 wirkende Antriebsmotor ist nicht weiter dargestellt. In dieser ersten Entformungsphase bewegt sich der Kern 54 gemeinsam mit dem Auswerferorgan 44, wobei er das Werkstück 12 mitnimmt und aus der Hohlform 56 löst, während die Auswerfernadeln 52 synchron dazu die Trägerplatte 10 aus der Aussparung 56' herausdrücken.

Am Ende dieser ersten Entformungsstufe stützt sich gemäß Figur 8 der Endanschlag 66 des Kerns 54 auf der Oberfläche 68 der oberen Formplatte 40 ab, so daß in der darauf folgenden zweiten Entformungsstufe der Kern 54 nicht weiter nach unten verfahren wird, während das Auswerferorgan 44 seine Verschiebebewegung nach unten fortsetzt.

Dabei werden, wie die Figuren 9 und 10 zeigen, die beiden Formelemente 72 durch die nach außen vorspringenden, horizontalen Teile des Kopfes 20, der sich weiter nach unten bewegt, um ihre Schwenkachsen 74 nach außen und damit aus der Hinterschneidung 16 herausgeschwenkt, so daß das Werkstück 12 freigegeben wird.

Figur 11 zeigt ein Ausführungsbeispiel, bei dem der Kern 54 zur Herstellung eines Bauteils nach Figur 4 aus zwei parallel zueinander angeordneten Platten 54' besteht, die in entsprechenden Durchtrittsöffnungen der Formplatte 40 vertikal verschiebbar geführt sind. Am unteren Ende jeder Platte 54' ist auch hier ein Formelement 72 über eine Schwenkachse 74 angelenkt, so daß die aufeinander zugewandten Köpfe 20 hergestellt werden können.

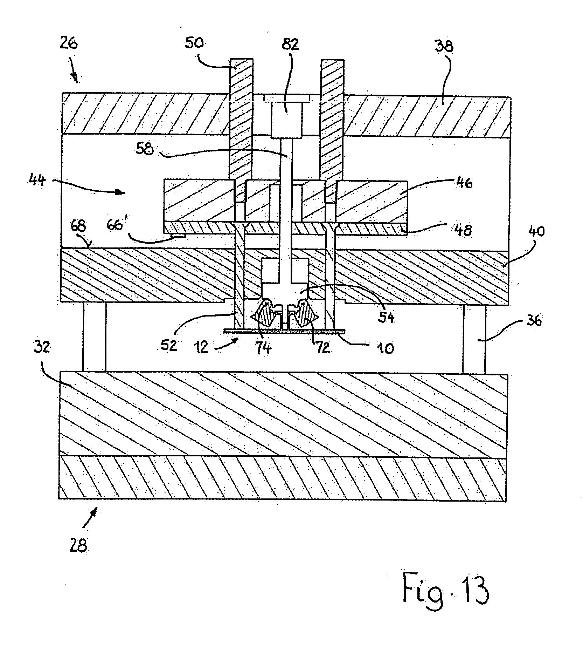

In Figur 13 ist eine weitere Möglichkeit für die Ausbildung des Werkzeugs gezeigt, bei der zusätzlich zu dem nicht dargestellten elektrischen, hydraulischen oder pneumatischen Antriebsmotor für das Auswerferorgan 44, der an den Auswerferstangen 50 angreift, ein zweiter Antriebsmotor 82 vorgesehen ist, der zur Verschiebung des Kerns 54 dient. Dieser zweite Antriebsmotor 82 elektrischer, hydraulischer oder pneumatischer Bauart ist in einem Sitz in der Aufspannplatte 38 des Formoberteils 26 untergebracht und verschiebt in der ersten Öffnungsphase zum Entformen des Werkstücks 12 den Kern 54 über seinen Stempel 58 nach unten, und zwar synchron zu der Abwärtsbewegung des Auswerferorgans 44, die durch den ersten Antriebsmotor bewirkt wird. Sobald der Kern 54 eine Stellung erreicht hat, in der die Formelemente 72 ausschwenken können, wird die Abwärtsbewegung des Kerns 54 durch Anhalten des zweiten Antriebsmotor 82 unterbrochen; hierzu ist ein als Sensor 66' wirkender Endanschlag vorgesehen, der beispielsweise an der unteren Auswerferplatte 48 angebracht sein kann, um bei Erreichen eines festgelegten Abstandes zwischen der unteren Auswerferplatte 48 und der Oberseite 68 der Formplatte 40 den zweiten Antriebsmotor 82 abzuschalten. In der folgenden zweiten Entformungsstufe bewegt sich das Auswerferorgan 44 durch den weiterlaufenden ersten Antriebsmotor weiter nach unten, so daß die Formelemente 72 aus den Hinterscheidungen 16 herausgeschwenkt werden und das Werkstück 12 freikommt.

## Patentansprüche

1. Werkzeug zur Herstellung von Bauteilen (12) aus Kunststoff oder Metall durch Spritzguß, Druckguß oder mittels Ablegeverfahren, die von einer Trägerplatte (10) nach einer Seite abstehen und eine Öffnung oder Hinterschneidung (16) haben, bestehend aus einer Schließeinheit (22) mit einem Formunterteil (24) und einem relativ dazu verschiebbaren Formoberteil (26), dem ein Kern (54) sowie ein Auswerferorgan (44) zugeordnet sind, wobei das Auswerferorgan (44) in der Verschieberichtung des Formoberteils (26) relativ zu diesem verfahrbar ist und daß der Kern (54) seinerseits in dem Auswerferorgan (44) in dessen Verschieberichtung beweglich gelagert ist und einen Endanschlag (66) zur Begrenzung seiner Verschiebebewegung relativ zum Auswerferorgan (44) bei dessen Auswurfbewegung hat, wobei im unteren Bereich des Kerns (54) wenigstens ein aus der Öffnung oder Hinterschneidung (16) ausschwenkbares Formelement (72) angelenkt ist, dessen der Öffnung bzw. Hinterschneidung (16) zugewandte Außenfläche (76) der Form der Öffnung bzw. Hinterschneidung (16) entspricht.

2. Werkzeug nach Anspruch 1, **dadurch gekennzeichnet, daß** die Schwenkachse (74) des Formelementes (72) rechtwinklig zur Verschieberichtung des Kerns (54) verläuft.

3. Werkzeug nach Anspruch 1 oder 2, **dadurch gekennzeichnet, daß** das schwenkbare Formelement (72) an seiner unteren, von der Außenfläche (76) abgewandten Seite einen divergierenden Fortsatz (78) aufweist, der bei geschlossenem Werkzeug in eine entsprechende Anfasung (80) des Formoberteils (26) abdichtend eingreift.

4. Werkzeug nach einem der vorhergehenden Ansprüche, **dadurch gekennzeichnet, daß** der Kern (54) gegen die Kraft einer Druckfeder (64) verschiebbar in dem Auswerferorgan (44) abgestützt ist.

5. Werkzeug nach einem der vorhergehenden Ansprüche, **dadurch gekennzeichnet, daß** das Auswerferorgan (44) eine im Formoberteil (26) verschiebbar gelagerte Platte (46, 48) aufweist, von der Auswerfernadeln (52) abstehen, die sich parallel zu dem Kern (54) erstrecken.

6. Werkzeug nach Anspruch 5, **dadurch gekennzeichnet, daß** die Auswerfernadeln (52) und der Kern (54) in einer dem Formunterteil (24) gegenüberliegenden Formplatte (40) verschiebbar geführt sind.

7. Werkzeug nach einem der vorhergehenden Ansprüche, **dadurch gekennzeichnet, daß** dem Auswerferorgan (44) ein erster Antriebsmotor zu seiner Verschiebung relativ zum Formoberteil (26) zugeordnet ist.

8. Werkzeug nach Anspruch 7, **dadurch gekennzeichnet, daß** der Endanschlag (66) mit dem Kern (54) verbunden ist und daß die der Platte (48) gegenüberliegende Oberfläche (68) der Formplatte (40) als Abstützfläche für den Endanschlag (66) des Kern (54) dient.

9. Werkzeug nach Anspruch 7, **dadurch gekennzeichnet, daß** dem Kern (54) ein zweiter Antriebsmotor (82) zu seiner Verschiebung relativ zum Formoberteil (26) zugeordnet ist, der synchron zum ersten Antriebsmotor wirkt und der bei Aktivierung des als Sensor (66') ausgebildeten Endanschlags (66) über diesen abschaltbar ist.

## Claims

1. A tool for the manufacture of components (12) of plastic or metal by means of injection die casting, pressure die casting or by means of deposition methods, which protrude from a carrier plate (10) on one side and have an opening or undercut (16), consisting of a closing unit (22) with a mould lower part (24) and a mould upper part (26) that can slide relative to the former, to which a core (54) and also an ejector element (44) are assigned, wherein the ejector element (44) can be traversed in the sliding direction of the mould upper part (26) relative to the latter, and the core (54) for its part is moveably supported in the ejector element (44) in its sliding direction, and has an end stop (66) to limit its sliding movement relative to the ejector element (44) during its ejection movement, wherein in the lower region of the core (54) at least one mould element (72) that can swivel outwards from the opening or undercut (16) is hinged, whose outer surface (76) facing towards the opening or undercut (16) corresponds to the form of the opening or undercut (16).

2. The tool according to Claim 1, **characterised in that** the axis of rotation (74) of the mould element (72) runs at right angles to the sliding direction of the core (54).

3. The tool according to Claim 1 or 2, **characterised in that** the swivelling mould element (72) on its lower side, facing away from the outer surface (76) has a divergent skirt (78), which when the tool is closed engages in a corresponding chamfer (80) of the mould upper part (26) to form a seal.

4. The tool according to one of the previous claims, **characterised in that** the core (54) is supported such that it can slide in the ejector element (44) against the force of a compression spring (64).

5. The tool according to one of the previous claims, **characterised in that** the ejector element (44) has a plate (46, 48) supported such that it can slide in the mould upper part (26), from which ejector needles (52) protrude, which extend parallel to the core (54).

6. The tool according to Claim 5, **characterised in that** the ejector needles (52) and the core (54) are guided such that they can slide in a mould plate (40) opposing the mould lower part (24).

7. The tool according to one of the previous claims, **characterised in that** the first drive motor is assigned to the ejector element (44) to enable it to slide relative to the mould upper part (26).

8. The tool according to Claim 7, **characterised in that** the end stop (66) is connected with the core (54) and **in that** the surface (68) of the mould plate (40) opposing the plate (48) serves as a supporting surface for the end stop (66) of the core (54).

9. The tool according to Claim 7, **characterised in that** a second drive motor (82) is assigned to the core (54) to enable it to slide relative to the mould upper part (26), which acts synchronously with the first drive motor and which by the activation of the end stop (66) designed as a sensor (66') can be switched off via the latter.

## Revendications

1. Outil pour la fabrication d'éléments de construction (12) en plastique ou en métal, au moyen d'un procédé de moulage par injection, de moulage sous pression ou de dépôt, éléments qui font saillie d'un côté sur une plaque de support (10) et qui possèdent une ouverture ou une contre-dépouille (16), constitué d'une unité de fermeture (22) avec une partie inférieure de moule (24) et d'une partie supérieure de moule (26) déplaçable par rapport à la première, à laquelle sont attribués un noyau (54) ainsi qu'un organe d'éjection (44), l'organe d'éjection (44) pouvant être déplacé par rapport à la partie supérieure de moule (26), dans la direction de déplacement de celle-ci, et le noyau (54) étant quant à lui disposé dans l'organe d'éjection (44) de façon à pouvoir être mobile dans sa direction de déplacement et possédant un entraînement butée de fin de course (66) pour délimiter son mouvement de déplacement par rapport à l'organe d'éjection (44) lors du mouvement d'éjection de celui-ci, au moins un élément de moule (72) pivotant vers l'extérieur hors de l'ouverture ou de la contre-dépouille (16) étant articulé dans la région inférieure du noyau (54), élément dont la face extérieure (76) tournée vers l'ouverture ou la contre-dépouille (16) correspond à la forme de l'ouverture ou de la contre-dépouille (16).

2. Outil selon la revendication 1, **caractérisé en ce que** l'axe de pivotement (74) de l'élément de moule (72) s'étend perpendiculairement à la direction de déplacement du noyau (54).

3. Outil selon la revendication 1 ou 2, **caractérisé en ce que** l'élément de moule pivotant (72) comporte un prolongement divergent (78) sur son côté inférieur détourné de la face extérieure (76), qui s'engage de façon étanche dans un biseautage (80) correspondant de la partie supérieure de moule (26) lorsque l'outil est fermé.

4. Outil selon l'une des revendications précédentes, **caractérisé en ce que** le noyau (54) est appuyé dans l'organe d'éjection (44) de façon à pouvoir être déplacé contre la force d'un ressort à pression (64).

5. Outil selon l'une des revendications précédentes, **caractérisé en ce que** l'organe d'éjection (44) comporte une plaque (46, 48) disposée de façon à pouvoir être déplacée dans la partie supérieure de moule (26), sur laquelle font saillie des aiguilles d'éjection (52) qui s'étendent parallèlement au noyau (54).

6. Outil selon la revendication 5, **caractérisé en ce que** les aiguilles d'éjection (52) et le noyau (54) est introduit de façon déplaçable dans une plaque de moule (40) située en face de la partie inférieure de moule (24).

7. Outil selon l'une des revendications précédentes, **caractérisé en ce qu'**un premier moteur d'entraînement est attribué à l'organe d'éjection (44) pour son déplacement par rapport à la partie supérieure de moule (26).

8. Outil selon la revendication 7, **caractérisé en ce que** la butée de fin de course (66) est reliée au noyau (54) et **en ce que** la surface (68) de la plaque de moule (40) qui est située en face de la plaque (48) sert de surface d'appui à la butée de fin de course (66) du noyau (54).

9. Outil selon la revendication 7, **caractérisé en ce qu'**un deuxième moteur d'entraînement (82) est attribué au noyau (54) pour son déplacement par rapport à la partie supérieure de moule (26), agissant de façon synchrone avec le premier moteur d'entraînement et pouvant être arrêté lors de l'activation de la butée de fin de course (66) conçue comme un détecteur (66'), par le biais de celle-ci.
